(19) Europäisches Patentamt
European Patent Office
Office européen des brevets

(11) Publication number: **0 530 703 A2**

(12) **EUROPEAN PATENT APPLICATION**

(21) Application number: **92114739.3**

(51) Int. Cl.$^5$: **C08G 73/14**

(22) Date of filing: **28.08.92**

(30) Priority: **30.08.91 US 753275**

(43) Date of publication of application: **10.03.93 Bulletin 93/10**

(84) Designated Contracting States: **DE FR GB**

(71) Applicant: **EASTMAN KODAK COMPANY**
**343 State Street**
**Rochester, New York 14650-2201(US)**

(72) Inventor: **Perry, Robert James**
**c/o EASTMAN KODAK COMPANY, 343 State Street**
**Rochester, New York 14650-2201(US)**
Inventor: **Turner, S. Richard**
**c/o EASTMAN KODAK COMPANY, 343 State Street**
**Rochester, New York 14650-2201(US)**
Inventor: **Blevins, Richard Wayne**
**c/o EASTMAN KODAK COMPANY, 343 State Street**
**Rochester, New York 14650-2201(US)**

(74) Representative: **Brandes, Jürgen, Dr. rer. nat. et al**
**Wuesthoff & Wuesthoff, Patent- und Rechtsanwälte, Schweigerstrasse 2**
**W-8000 München 90 (DE)**

(54) **Method for the preparation of polyamide-imides.**

(57) A method for preparing a polymer including the step of reacting carbon monoxide and a reactant pair having respective general formulas

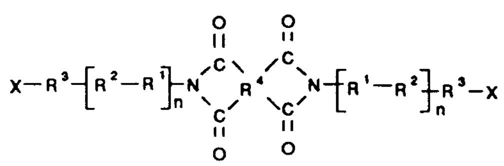

and

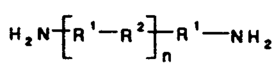

or a reactant pair having respective general formulas

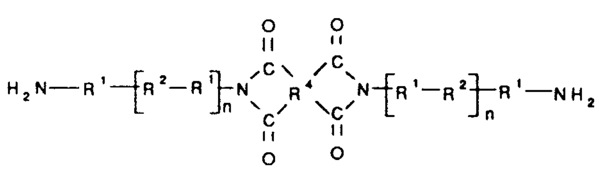

and

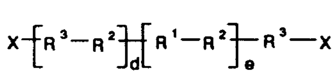

or a reactant having the general formula

EP 0 530 703 A2

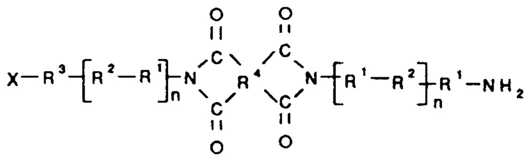

.

X is a nonortho halide selected from the group consisting of Br and I. n is an integer from 0 to 4, d is an integer from 0 to 1 and e is an integer from 0 to 3. If d is 0, then e is 0. $R^1$ is selected from the group consisting of alkyl, arylalkyl, aryl, heteroaryl, and cycloalkyl. $R^2$ is selected from the group consisting of

-O-, -S-, 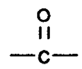 , 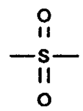 , 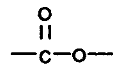 ,

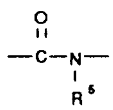 , 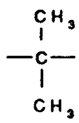 , 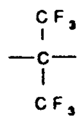 , 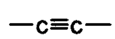 , 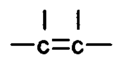 , 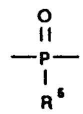 ,

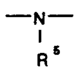 , 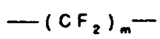 , and 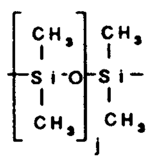 ,

wherein each $R^5$ is independently selected from the group consisting of alkyl and aryl, m is an integer from 1-12, and j is an integer between 0 and 300. $R^3$ is selected from the group consisting of substituted aryl, unsubstituted aryl, substituted heteroaryl, and unsubstituted heteroaryl. $R^4$ is selected from the group consisting of

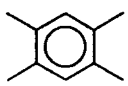 and 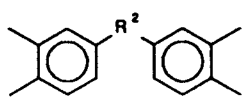 .

The present invention pertains to methods for preparing aromatic polymers. More particularly, the present invention pertains to processes for the preparation of polyamide-imides. Polyamide-imides are generally prepared by the reaction of 4-trimellitoyl anhydride chloride with an appropriate diamine as shown below.

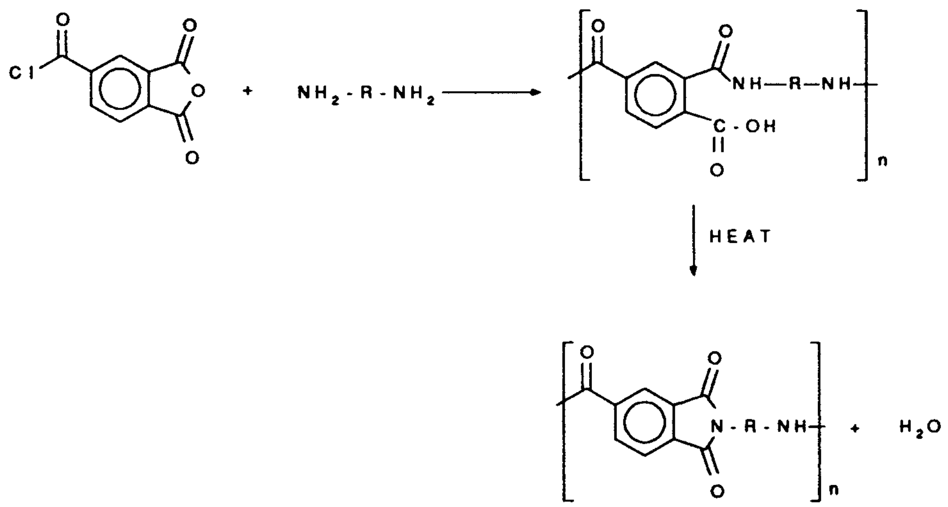


In that procedure, an intermediate polyamic acid is cyclized in an imide forming step with the elimination of water. This procedure presents the shortcomings of using moisture sensitive acid chlorides and driving off a small molecule in the imide forming step, which can create voids and defects in the polymer product. Polyamide-imides produced by this procedure have a backbone of alternating amide and imide units.

Japanese Kokai 123823, and Yoneyama and others, Macromolecules, Vol. 21, 1988, pp. 1908-1911 disclose the use of a Heck carbonylation reaction, that is, a transition metal catalyzed carbonylation and coupling, in the preparation of low molecular weight polyamides. U.S. Patents No.s 4,933,419; 4,933,466 and 4,933,467 and 4,933,468 disclose methods which utilize Heck carbonylation reactions to produce esters, imides and amide-imides, respectively.

It is an object of the invention to provide improved methods for the preparation of polyamide-imides which utilize a Heck carbonylation reaction rather than a post polymerization cyclization to give the imide structure and avoid the use of hydrolytically unstable acid chlorides. In the broader aspects of the invention there is provided a method for preparing a polymer including the step of reacting carbon monoxide and a reactant pair having respective general formulas

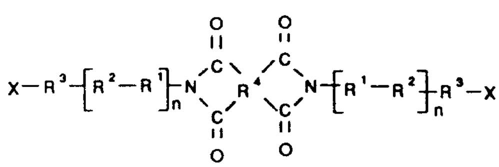

and

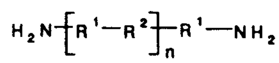

or a reactant pair having respective general formulas

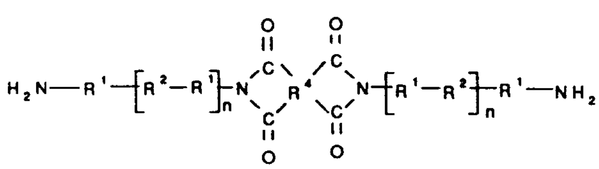

and

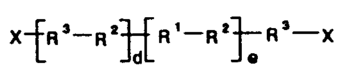

or a reactant having the general formula

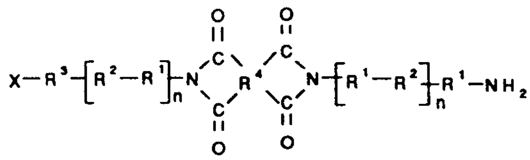

wherein for the formulas herein each X, $R^1$, $R^2$, $R^3$, $R^4$, and n is independently selected. X is a nonortho halide selected from the group consisting of Br and I. n is an integer from 0 to 4, d is an integer from 0 to 1 and e is an integer from 0 to 3. If d is 0, then e is 0. $R^1$ is selected from the group consisting of alkyl, arylalkyl, aryl, heteroaryl, and cycloalkyl. $R^2$ is selected from the group consisting of -O-, -S-,

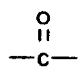 , 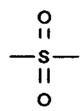 , 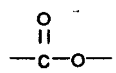 , 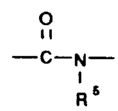 , 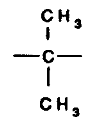 , 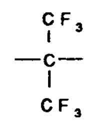 ,

$-C\equiv C-$ , 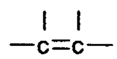 , 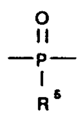 , 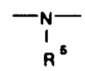 , $-(CF_2)_m-$ ,

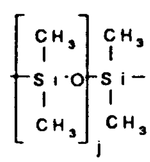

and ,

wherein each $R^5$ is independently selected from the group consisting of alkyl and aryl, m is an integer from 1-12, and j is an integer between 0 and 300. $R^3$ is selected from the group consisting of substituted aryl, unsubstituted aryl, substituted heteroaryl, and unsubstituted heteroaryl. $R^4$ is selected from the group consisting of

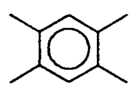 and

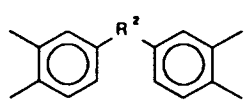 .

Polyamide-imides are widely used in composites and laminates and as high strength fibers and films.

The method for the preparation of polyamide-imides of the invention utilizes a palladium catalyzed carbonylation and condensation in solvent to provide polyamide-imides, which have a repeating unit with the general formula

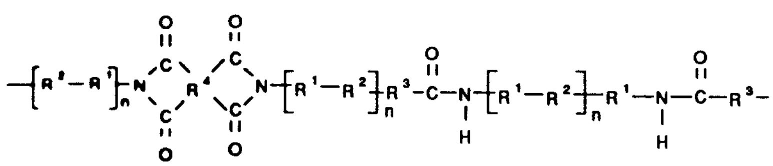

or

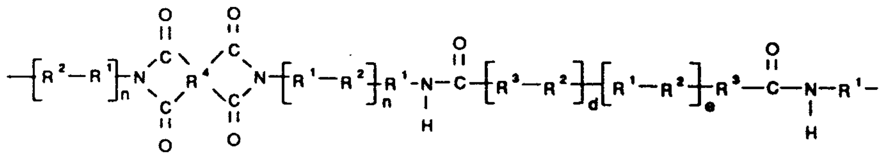

or

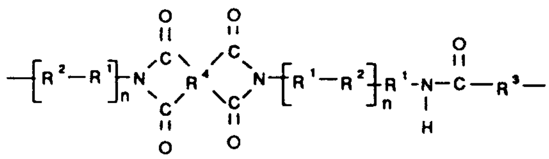

.

These polyamide-imides are produced by the reaction of carbon monoxide and, in respective order, a reactant pair having the general formulas

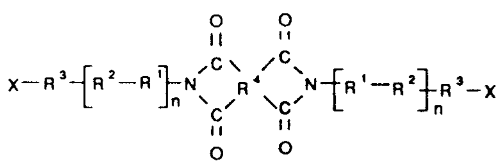

and

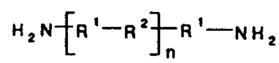

or a reactant pair having the general formulas

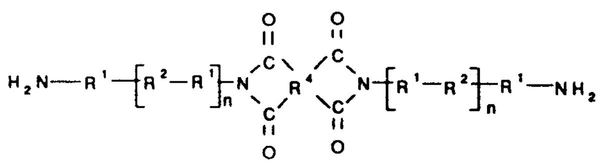

and

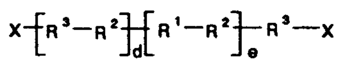

or a reactant having the general formula

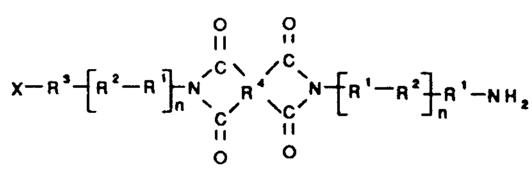

.

Each X, $R^1$, $R^2$, $R^3$, $R^4$ and n is independently selected. In the formulas, n is an integer from 0 to 4, d is an integer from 0 to 1 and e is an integer from 0 to 3. If d is 0, then e is 0. X is a nonortho halide selected from the group consisting of Br and I. In the polymer formulas, carbonyls of the amide moieties are nonortho.

$R^1$ separates $R^2$ from an imide ring. $R^1$ can be substituted or unsubstituted and can be alkyl, arylalkyl, cycloalkyl, aryl, or heteroaryl. Example $R^1$ groups include: phenyl, biphenyl, naphthalene, anthracene, thiophene, benzothiophene, pyridine, quinoline, furan, dibenzofuran, aromatic sulfones, diarylethers, diarylcarbonyls. These groups may be substituted by one or more alkyl groups, desirably alkyl groups having from 1 to 6 carbon atoms or more desirably methyl, ethyl, propyl and butyl groups. Additional substituents may include phenyl, halogen, hydroxy, amino, alkoxy having from 1 to 6 carbon atoms, and carboxylate groups. $R^1$ groups are unsubstituted or substituted with substituents which are unreactive, that is, substitutents which do not have a deleterious effect, for example steric hindrance or electronic deactivation, on the reaction of the dihalo compound in the polymerization reaction.

$R^2$ is a linking group, which in addition to connecting other portions of the molecule can also provide a selected functionality. Such functionality cannot react in the polymerization reaction, unless it is specifically

desired that such reaction occur, in which case chain branching may occur. The selected functionality cannot seriously deactivate the diiodo imide compound toward reaction in the polymerization reaction, nor interfere with the reaction in any way. $R^2$ is selected from the group consisting of

-O-, -S-, -

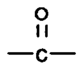 , 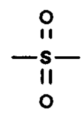 , 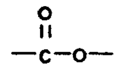 , 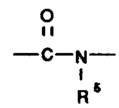 , 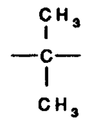 , 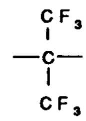 ,

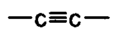 , 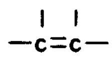 , 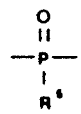 , 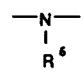 , $-(CF_2)_m-$ , and

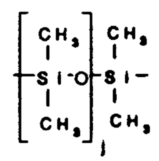 .

Each $R^5$ is independently selected from the group consisting of alkyl and aryl; m is an integer from 1-12; and j is an integer between 0 and 300.

$R^3$ is aryl or heteroaryl. Example $R^3$ groups include: phenyl, biphenyl, naphthalene, anthracene, thiophene, benzothiophene, pyridine, quinoline, furan, dibenzofuran, aromatic sulfones,diarylethers, diarylcarbonyls. In addition to the halo group, $R^3$ groups can be unsubstituted or substituted with substituents which are unreactive, that is, substitutents which do not have a deleterious effect, for example steric hindrance or electronic deactivation, on the reaction of the dihalo compound in the polymerization reaction.

$R^4$ is selected from the group consisting of

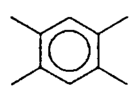 and 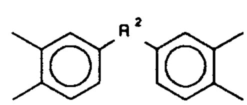 .

Suitable dihalo imide reactants include: bis(4-{N-(4-iodophenyl)phthalimide})ether, bis(4-{N-(3-iodophenyl)phthalimide})ether, 2,2-bis(4-{N-(3-iodophenyl)phthalimide})hexafluoropropane, 2,2-bis(3-{N-(3-iodophenyl)phthalimide})hexafluoropropane, bis(4-{N-(4-iodophenyl)phthalimide})ketone, bis(4-{N-(3-iodophenyl)phthalimide})ketone, bis(4-{N-(4-iodophenyl)phthalimide})sulfone, bis(4-{N-(3-iodophenyl)-phthalimide})sulfone, bis(N-(4-iodophenyl))pyromellitimide, and bis(N-(3-iodophenyl))pyromellitimide.

Suitable diamino coreactants include: 1,4-diaminobenzene, 1,3-diaminobenzene, 4,4'-diaminodiphenylether, 3,4'-diaminodiphenylether, 4,4'-diaminodiphenylmethane, 4,4'-diaminobenzophenone, 4,4'-diaminodiphenylsulfone, 2,2-bis(4-(4-aminophenoxy)phenyl)propane, 5-amino-3-(4-aminophenyl)-1,1,3-trimethylindane, 1,4-bis(2-(4-aminophenyl)propyl)benzene, 4,4'-bis(3-aminophenoxy)diphenylsulfone, 1,6-diaminohexane, and bis(3-aminopropyl)tetramethyldisiloxane.

Suitable diamino imide reactants include: bis(N-(4-aminophenyl))pyromellitimide, bis(N-(3-aminophenyl)-)pyromellitimide, bis(4-{N-(4-aminophenyl)phthalimide})ketone, bis(4-{N-(3-aminophenyl)phthalimide})-ketone, bis(4-{N-(4-aminophenyl)phthalimide})ether, bis(4-{N-(3-aminophenyl)phthalimide})ether, bis(4-{N-(4-aminophenyl)phthalimide})methane, bis(4-{N-(3-aminophenyl)phthalimide})methane, 2,2-bis(4-{N-(4-aminophenyl)phthalimide})hexafluoropropane, 2,2-bis(4-{N-(3-aminophenyl)phthalimide})hexafluoropropane, bis(4-{N-(4-aminophenyl)phthalimide})sulfone, bis(4-{N-(3-aminophenyl)phthalimide})sulfone, bis(N-{4-(4-aminophenoxy)phenyl})pyromellitimide, and bis(N-{4-(3-aminophenoxy)phenyl})pyromellitimide.

Suitable dihalo coreactants include: 1,4-diodobenzene, 1,3-diodobenzene, 4,4'-diiododiphenyl ether, 4,4'-diiodobenzophenone, 2,6-diiodonaphthalene, 2,8-diiododibenzofuran, 4,4'diiododiphenylsulfone, 4,4'diiodobiphenyl, 1,4-dibromobenzene, 1,3-dibromobenzene, 4,4'dibromodiphenylmethane,

4,4'dibromobenzophenone, 2,6-dibromonaphthalene, 4,4'-dibromodiphenyl, 2,5-bis(4-bromophenyl)-3,4-diphenylthiophene, 2,5-diiodothiophene, and 2,6-diiodopyridine.

Suitable halo-amino imide reactants include: N-(4-aminophenyl)-N-(4-iodophenyl)pyromellitimide, N-(3-aminophenyl)-N-(3-iodophenyl)pyromellitimide, 2-(4-{N-(4-aminophenyl)phthalimide})-2-(4-{N-(4-iodophenyl)phthalimide})hexafluoropropane, 2-(4-{N-(3-aminophenyl)phthalimide})-2-(4-{N-(3-iodophenyl)-phthalimide})hexafluoropropane, 2-(4-{N-(4-aminophenyl)phthalimide})-2-(4-{N-(4-(4-iodophenoxy)phenyl)-phthalimide})hexafluoropropane, and 2-(4-{N-(4-aminophenyl)-phthalimide})-2-(4-{N-(4-(4-iodophenoxy)-phenyl) phthalimide})hexafluoropropane.

It is desirable that the imide reactant and any coreactant not have a valence as to haloaryls and amines greater than two; however, imide reactants and coreactants which bear more halogens or amines can be used if one wishes to introduce branching, which can affect the rheological, physical and processing properties of the polymer.

Although reactants are discussed herein as individual compounds, the method of this application is not limited to reactions utilizing individual compounds as reactants, but is also inclusive of reactions utilizing mixtures of compounds as reactants. The method of the invention is not limited to any particular imide reactant, nor to any particular coreactant, however, it is necessary that a selected coreactant and/or imide reactant react under the reaction conditions employed to form the polyamide-imide. It is desirable that the reactants be sufficiently stable under the reaction conditions employed and that the reactants not be subject to an unacceptable amount of undesirable side reactions, to prevent the formation of an unacceptable amount of byproduct. It is also desirable that the reactants be free of groups which unduly retard the reaction by, for example, steric hindrance or lowering the activity of the catalyst.

The reactants are contacted with carbon monoxide. It is convenient to add an excess of carbon monoxide to the reaction zone. The excess of carbon monoxide need not be measured; one can merely pressurize the vessel with carbon monoxide to the desired reaction pressure. Carbon monoxide can be at, or below atmospheric pressure or at a higher pressure. Carbon monoxide pressures up to 200 atmospheres or higher can be used in the process. It is expected that increasing the carbon monoxide pressure will yield a faster reaction rate and greater molecular weight polymers, if the reactants have iodo groups. The opposite effect is expected if the reactants have only chloro and bromo groups.

In the disclosed embodiments of the invention, the reaction step is conducted in the presence of an organic solvent, which appreciably dissolves both reactants to provide a liquid reaction medium and facilitates the contacting of the reactants and the catalyst. It is desirable that the solvent be "inert" to the reaction, that is, that the solvent not enter into the reaction in an undesired way. The invention is not limited to a particular solvent or solvent system and a wide variety of organic compounds can be used. In a particular embodiment of the invention, exemplary solvents are hydrocarbon solvents, such as toluene and ether solvents, such as tetrahydrofuran, diglyme (2-methoxyethyl ether), and glyme (1,2-dimethoxyethane). In another embodiment of the invention, a desirable solvent is dipolar and aprotic, that is, the solvent is a highly polar molecule with hydrogens that are not easily abstractable. Exemplary dipolar aprotic solvents include dimethylformamide; dimethylacetamide; dimethylsulfoxide; 1,3-dimethyl-2-imidazolidinone; hexamethylphosphoramide; N-methylpyrrolidinone; N-cyclohexylpyrrolidinone; dimethylimidazolidinone; and the like.

The amount of solvent present is not critical to the reaction, however, it is desirable to use enough solvent to facilitate the reaction. Specific polymers can have optimum concentrations in various solvents. There is no theoretical upper limit on the amount of solvent employed, however, practical limits are imposed by the size of the reaction vessel, the ease of separation of product from the reaction medium, cost and other factors. It is ordinarily desirable that the amount of solvent used be within the range of from 0.1 and 1000 parts by weight based on the weight of imide reactant used. It is also ordinarily desirable that the reaction medium be agitated, for example, by stirring to facilitate the dissolution of carbon monoxide.

The process of the invention is carried out in the presence of a catalyst. The catalyst is preferentially a palladium compound, where palladium is present in the zero valent or divalent state. However, other transition metal catalysts, for example, platinum and nickel catalysts can be used. The palladium catalysts generally have one or more ligands bonded to one or more palladium atoms by ionic or covalent bonds. Simple palladium salts such as $PdX_2$, in which X is Cl, Br or I, can be used. Other representative palladium catalysts are listed below.

TABLE 1

Palladium catalysts

$Pd^{+2}$

| | |
|---|---|
| $PdX_2L_2$ | X = Cl, Br, I<br>L = $R_3P$, where R = alkyl or aryl |
| $Pd(OAc)_2$ | OAc = acetate |
| $Pd(OAc)_2L_2$ | OAc = acetate |
| $PdCl_2(RCN)_2$ | R = $CH_3$, Phenyl |
| $PhPdXL_2$ | X = Br, I |
| $PdCl_2(COD)_2$ | COD = cis, cis-1,5-cyclooctadiene |
| $Pd(acac)_2$ | acac = 2,4-pentanedionate |
| $PdCl_2DPPF$ | DPPF = 1,1'-bis(diphenylphosphino) ferrocene |
| $PdCl_2DPPE$ | DPPE = 1,2-bis(diphenylphosphino) ethane |
| $PdCl_2DPPP$ | DPPP = 1,3-bis(diphenylphosphino) propane |
| $PdCl_2DPPB$ | DPPB = 1,4-bis(diphenylphosphino) butane |

Pd(0)

| | |
|---|---|
| $PdL_4$ | L = $R_3P$, where R = alkyl or aryl |
| $Pd_2$( 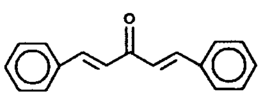 )$_3$ | |
| $Pd(DPPE)_2$ | DPPE = 1,2-bis(diphenylphosphino) ethane |
| $Pd(DPPP)_2$ | DPPP = 1,3-bis(diphenylphosphino) propane |
| $Pd(DPPB)_2$ | DPPB = 1,4-bis(diphenylphosphino) butane |

A catalytic amount of catalyst is employed. By "catalytic amount" is meant an amount of catalyst which catalyzes the reaction to the desired extent. Generally, the amount of catalyst is at least 0.01 mole percent based on the molar amount of imide reactant. There is no real upper or lower limit on the amount of catalyst, this being defined by secondary considerations such as cost and ease of separation of the catalyst from products and unreacted reactants. A preferred catalytic amount is from 0.005 to 0.20 moles per mole of imide reactant. The catalyst may be bound to a support or unsupported.

The reaction can take place in the presence of an activating ligand, such as phosphine or arsine ligand. Such a ligand can be used with a catalyst, for example, triphenylphosphine with bis(triphenylphosphine) palladium(II) chloride, to increase the rate of the catalyzed reaction. The amount of ligand used is desirably between 0.01 mole and 5.0 moles per mole of metal catalst, and more desirably at 2 moles per mole of metal catalyst. It is believed that the presence of the activating ligand speeds up the oxidative addition of

such catalysts by making the catalyst more nucleophilic.

The process of this invention is preferably conducted in the presence of a base to neutralize byproduct hydrogen halide. The base can be a tertiary amine such as tributylamine, pyridine, 1,8-diazobicyclo(5,4,0)-7-undecene (DBU) or 1,5-diazobicyclo(4,3,0)non-5-ene (DBN) or have the formula:

$NR_3$

wherein each R is independently selected from lower alkyl groups having from 2 to 6 carbon atoms. The base can be immobilized on a crosslinked polymer such as cross-linked poly(vinylpyridine) beads. Alternatively, the base can be another type of basic substance which does not react with the reactants, for example, a metal carbonate such as $K_2CO_3$ or a metal hydroxide such as $Ca(OH)_2$ or a metal acetate such as sodium acetate. Generally, one employs at least enough base to react with the by-product hydrogen halide produced. An excess can be used, if desired.

As with the reactants, solvents and catalysts, a skilled practitioner will recognize that the exact structure of the base is not critical, and the examples of compounds set forth above are merely illustrative and not-limiting examples of materials that can be used in this invention. A skilled practitioner will recognize that other materials can be substituted in this invention to achieve similar results.

The process of this invention is preferably conducted at a temperature within the range of from room temperature, that is, 20 degrees C, to 250 degrees C. A desirable temperature range is from 70 degrees C to 150 degrees C. A skilled practitioner will recognize that the reaction temperature is not critical, and that temperatures outside this range can be employed, if desired. Generally, one selects a reaction temperature which affords a reasonable rate of reaction and which does not give an undue amount of decomposition of products or reactants.

The reaction time is not a truly independent variable but is dependent at least to some extent on the other reaction parameters selected such as the reactivity of the reactants, activity and amount of catalyst, reaction temperature, pressure and so forth. Generally, reaction times within the range of from 0.1 to 100 hours are used.

The polyamide-imides produced by the method of the invention do not require the addition of salt to the reaction mixture. Salt can be added to the reaction medium in the methods of the invention. The salt may impart solubility to some polymers, presumably by breaking up hydrogen bonding on the polymer chains. It is desirable to keep the polyamide-imide in solution from the standpoint of process efficiency. Suitable salts include salts of lithium such as LiCl, LiBr, and $CaCl_2$.

The method of the invention is not limited by a particular theory or explanation, however, a theoretical explanation can be provided. It is believed that method of the invention includes the following reaction mechanism sequence, which further comprises an oxidative addition step, a carbon monoxide insertion step and a coupling step. More specifically, a palladium(0) catalyst, which may be introduced as a palladium(0) complex or as a palladium(II) species which is subsequently reduced in situ, undergoes oxidative addition to a halo compound generating an aryl palladium(II) halo intermediate. The ligands on palladium may be CO, phosphines or amines. Since the palladium catalyst is present in small quantities relative to the halo compound, it is unlikely that bis(aryl palladium(II) halo) intermediates are formed to any great degree, but the oxidative addition reaction takes place at both halos of dihalo compounds at some point during the reaction. Then CO insertion generates an acyl palladium(II) halo complex. This electrophilic acyl palladium complex is then attacked by the amino containing reactant in the coupling reaction. The hydrogen halide which is liberated is neutralized by the added base (DBU) and the palladium(O) catalyst is regenerated. This mechanism sequence is illustrated below for the reaction of 4,4'-diaminodiphenylether and 2,2-bis(4-{N-(3-iodophenyl)phthalimide})hexafluoropropane:

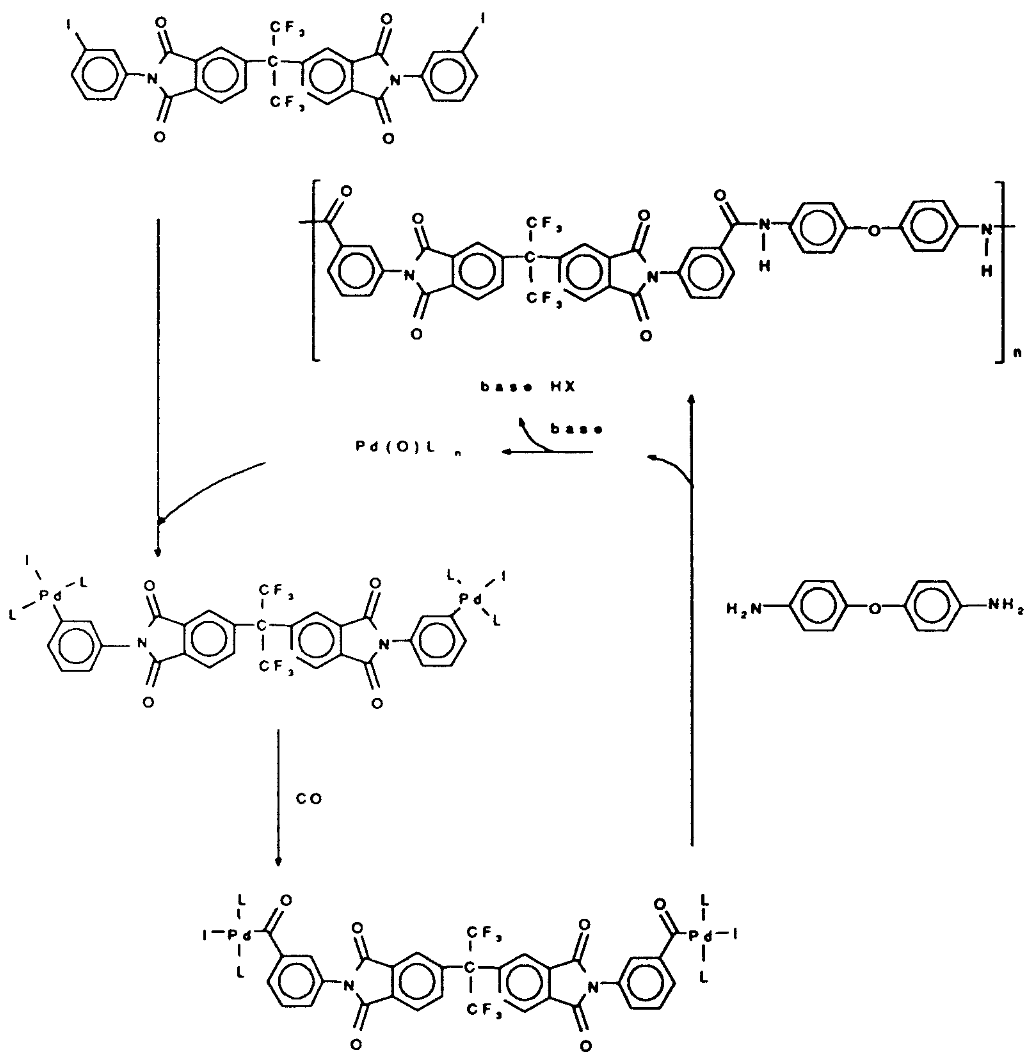


The polyamide-imides of the method of the invention are useful as homopolymers, block copolymers or random copolymers or in blends with other materials or polymers. It is within the scope of the methods of the invention to produce polyamide-imides having number average molecular weights in a useful range for such purposes, for example, between 1000 and 150,000. The polymers of the invention may be used for engineering plastics or fibers or other high performance applications and depending upon the intended use, may include one or more additives, such as, inorganic fillers, reinforcing fibers, titanium dioxide, stabilizers, plasticizers, and antioxidants. The following examples are presented for a further understanding of the invention:

PREPARATION OF DIHALOARYLBISPHTHALIMIDES

Dihaloarylbisphthalimides useful in the method of the invention can be produced using procedures exemplified by the following preparations.

Preparation of bis(N-4-iodophenyl)pyromellitimide:

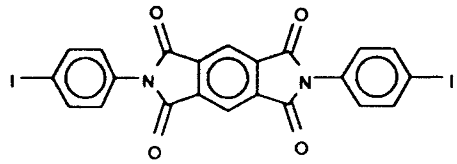

.

A 300 ml 3-necked round-bottomed flask, equipped with stirrer and condenser, was charged with *p*-iodoaniline (10 grams, 0.045 mol) followed by N,N-dimethylacetamide (herein also referred to by the term "DMAc") (50 milliliters). The reaction mixture was stirred and heated to about 70 ° C. Pyromellitic dianhydride (4.91 grams, 0.0225 mol) was added. The reaction mixture was stirred for 10 minutes and pyridine (12.4 grams, 0.16 mol) was added. The reaction was maintained at 70 ° C for 30 minutes. Acetic anhydride (18.4 grams, 0.18 mol) was then added dropwise. A yellow precipitate formed within a few minutes. The reaction was then maintained at between 70-80 ° C for 4 hours. The reaction mixture was cooled and the precipitate was collected by vacuum filtration. The precipitate was washed three times with fresh portions of diethyl ether (100 milliliters), air dried, and then vacuum dried at 40 ° C for 72 hours. The yield was approximately quantitative. The infrared spectrum showed characteristic imide absorptions at 1780 and 1720 $cm^{-1}$ and no absorptions due to non-cyclized product. Differential scanning calorimetry (DSC) indicated decomposition at a temperature in excess of 350 ° C. Combustion analysis: calculated: C = 42.61, H = 1.63, N = 4.52; measured: C = 42.47, H = 1.67, N = 4.30.

Preparation of bis(N-3-iodophenyl) pyromellitimide:

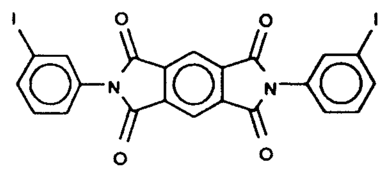

.

The same procedures were followed and results are presented as in the preparation of bis(N-4-iodophenyl) pyromellitimide, with the exception that *m*-iodoaniline was used in place of *p*-iodoaniline. DSC temperature was in excess of 340 ° C. Combustion analysis was: calculated: C = 42.61, H = 1.63, N = 4.52; measured: C = 42.75, H = 1.85, N = 4.38.

Preparation of bis(N-4-iodophenyl)-(4,4'-hexafluoroisopropylidene)-bis(phthalimide):

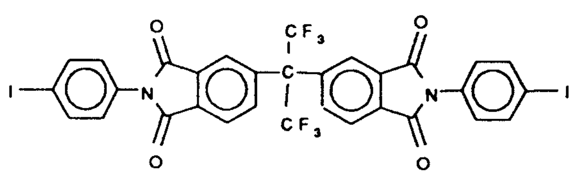

.

A 1 liter 3-necked round-bottomed flask, equipped with stirrer and condenser, was charged with *p*-iodoaniline (87 grams, 0.4 mol) followed by DMAc (500 milliliters). The reaction mixture was stirred and heated to 70-80 ° C. Hexafluoroisopropyl dianhydride (89 grams, 0.2 mol) was added as powder. Pyridine (110 grams, 1.39 mol) in 50 milliliters of DMAc was then added. The reaction was maintained at about 70 ° C for 30 minutes. Acetic anhydride (166 grams, 1.63 mol) was then added dropwise over a 45 minute period, during which a yellow precipitate formed. The reaction was then maintained at about 70 ° C for 4

hours. The product slurry was collected by filtration, washed with water (2 liters) twice, washed with methanol (2 liters) twice, filtered, and then vacuum dried at 40 ° C for 72 hours. The yield was approximately 98%. Melting point as determined by DSC was 308-310 ° C. IR and proton NMR spectra were consistent with the above structure.

Preparation of bis(N-3-iodophenyl)-(4,4'-hexafluoroisopropylidene)-bis(phthalimide):

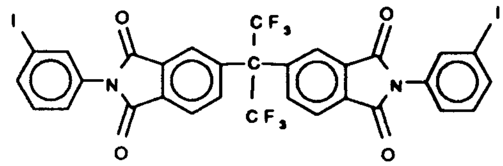

The same procedures were followed and results are presented as in the preparation of bis(N-4-iodophenyl)-(4,4'-hexafluoroisopropylidene)-bis(phthalimide), with the exception that *m*-iodoaniline was used in place of *p*-iodoaniline. Conversion to product was at 85%. Melting point as determined by DSC was 242 ° C.

Preparation of bis-(N-4-iodophenyl-3,3',4,4'-benzophenone)-bis-phthalimide:

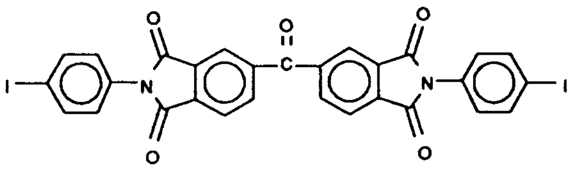

A 1 liter 3-necked round-bottomed flask, equipped with stirrer and condenser, was charged with benzophenone tetracarboxylic dianhydride (21.91 grams, 0.068 mol), *p*-iodoaniline (30.0 grams, 0.137 mol) and pyridine (39 milliliters, 0.48 mol) and DMAc (500 milliliters). The reaction mixture was degassed and purged with argon and then heated for 1 hour at 100 ° C. Acetic anhydride (52 milliliters, 0.55 mol) was then added and the reaction mixture was maintained at 100 ° C for 16 hours. A yellow precipitate, which formed, was cooled to room temperature and isolated by filtration. The precipitate was washed with DMAc, then methanol, then dried under vacuum at 90 ° C for 4 days. The yield was approximately 81%. Melting point as determined by DSC was 430 ° C. Combustion analysis was: calculated: C = 48.09, H = 1.95, N = 3.87; measured: C = 48.65, H = 2.14, N = 3.87.

EXAMPLE 1

A clean, dry pressure vessel was charged with the following reagents under an inert atmosphere in a dry box: 4,4'-diaminodiphenylether (0.40, 2 mmol), N,N-dimethylacetamide (DMAc) (10 grams), DBU (0.73 grams, 4.8 mmol), $PdCl_2L_2$ (.084 grams, 0.12 mmol), and 2,2-bis(4-{N-(3-iodophenyl)phthalimide})-hexafluoropropane (1.61 grams, 1.9 mmol), in that order. The vessel was sealed and removed from the dry box. The vessel was purged four times with carbon monoxide, pressurized to 7.4 kg/cm$^2$ with carbon monoxide, and maintained at 90 ° C for 30 minutes. An additional increment of 2,2-bis(4-{N-(3-iodophenyl)-phthalimide})hexafluoropropane (0.08 grams, 0.1 mmol) in DMAc (4 grams) was then added. The vessel was then repurged and repressurized with carbon monoxide and maintained at 90 ° C for one hour. The resulting viscous mixture was diluted with DMAc (150 milliliters), filtered and precipitated into ethyl ether. The polymer product was filtered and dried under vacuum at 110 ° C for 48 hours. The inherent viscosity of the polymer was determined by analyzing a 0.25 weight/volume percent solution of the polymer in DMAc at 25 ° C with a Schott Gerate 526-10 viscometer. Size exclusion chromatography data was obtained from a Waters HPLC using μ-styragel columns of $10^6$,$10^5$,$10^4$,$10^3$ Angstroms calibrated against poly-(methylmethacrylate) standards to obtain a weight average molecular weight determination (also referred to

herein as $M_W$). Results are presented in Table 2.

EXAMPLE 2

A clean, dry pressure vessel was charged with the following reagents under an inert atmosphere in a dry box: *p*-phenylene diamine (0.216 grams, 2 mmol), 2,2-bis(4-{N-(4-iodophenyl)phthalimide})-hexafluoropropane (1.64 grams, 1.84 mmol), $PdCl_2L_2$ (.084 grams, 0.12 mmol), anhydrous N-methyl pyrrolidinone (15 grams), DBU (0.73 grams, 3.61 mmol), lithium chloride (0.5 grams), in that order. The vessel was sealed and removed from the dry box. The vessel was purged three times with carbon monoxide, pressurized to 7.4 kg/cm$^2$ with carbon monoxide, and maintained at 90°C for two hours. The reaction mixture was diluted with DMAc (25 milliliters), filtered, and precipitated into methanol. The precipitate was collected by vacuum filtration and dried under vacuum at 60°C for 48 hours. The results are presented in Table 2.

EXAMPLE 3

A clean, dry pressure vessel was charged with the following reagents under an inert atmosphere in a dry box: 2,2-bis(4-(4-aminophenoxy)phenyl)propane (0.825 grams, 2.1 mmol) (CAS 13080-86-9, obtained from Kennedy & Klim), 2,2-bis(4-{N-(4-iodophenyl)phthalimide})hexafluoropropane (1.5 grams, 2.0 mmol), N,N-dimethylacetamide (DMAc) (20 grams), 1,8-diazabicyclo(5.4.0.)undec-7-ene (DBU) (0.73 grams, 4.8 mmol), triphenylphosphine (0.06 grams, 0.23 mmol), and bis(triphenylphosphine)palladium (II) chloride (0.08 grams, 0.1 mmol). The vessel was sealed and removed from the dry box. The vessel was purged four times with high purity carbon monoxide, pressurized to 7.7 kg/cm$^2$ with carbon monoxide, and maintained with magnetic stirring in an oil bath at 100°C for 20 hours. The reaction mixture was diluted with DMAc (15 milliliters), filtered, and precipitated into methanol. The precipitate was collected by vacuum filtration and dried under high vacuum at 110°C for 48 hours. The polymer was analyzed as in Example 2 and the results are presented in Table 2.

TABLE 2

| EXAMPLE | 1 | 2 | 3 |
|---|---|---|---|
| Yield (%) | 98 | Approx. 100 | Approx. 100 |
| $\eta_{inh}$ | 1.24 | -- | -- |
| $M_w$ | 163,000 | 128,000 | 78,700 |

## Claims

1. A method for preparing polyamide-imide in the presence of catalyst and solvent, comprising reacting carbon monoxide and
an imide reactant and a coreactant having respective general formulas

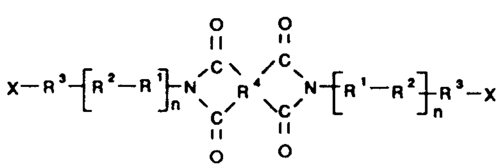

and

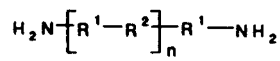

or an imide reactant and a coreactant having respective general formulas

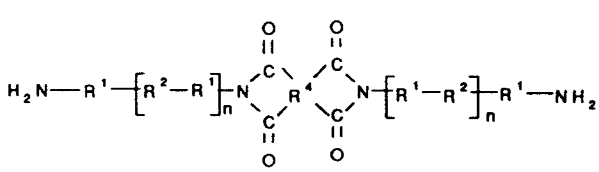

and

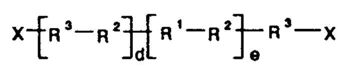

or an imide reactant having the general formula

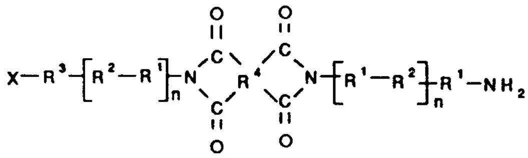

wherein for the formulas herein each X, $R^1$, $R^2$, $R^3$, $R^4$, and n is independently selected and

-X is a nonortho halide selected from the group consisting of -Br and -I,

n is an integer from 0 to 4, d is an integer from 0 to 1, e is an integer from 0 to 3, with the proviso that if d is 0 then e is 0,

-$R^1$- is selected from the group consisting of alkyl, arylalkyl, aryl, heteroaryl, cycloalkyl,

-$R^2$- is selected from the group consisting of

-O-, -S-, 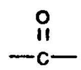 , 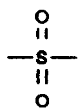 , 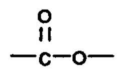 , 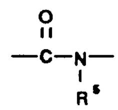 , 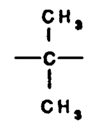 ,

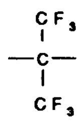 , 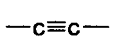 , 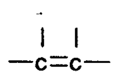 , 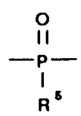 , 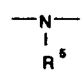 , $-(CF_2)_m-$ , and

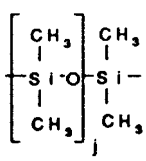 ,

wherein each $R^5$ is independently selected from the group consisting of alkyl and aryl, m is an integer from 1-12, and j is an integer between 0 and 300,

-$R^3$- is selected from the group consisting of substituted aryl, unsubstituted aryl, substituted heteroaryl, and unsubstituted heteroaryl, and

-$R^4$- is selected from the group consisting of

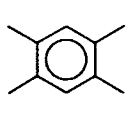 and 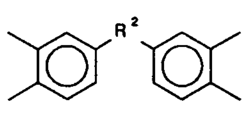 .

2. The method of Claim 1 further comprising neutralizing hydrogen halide.

3. The method of Claims 1 or 2 wherein X is iodo and said reaction is conducted at a carbon monoxide pressure greater than atmospheric pressure.

4. The method of Claims 1, 2, or 3 wherein $R^3$ is phenyl.

5. The method of Claim 4 wherein n is zero.

6. The method of Claims 1, 2, or 3 wherein said imide reactant is selected from the group consisting of bis(4-{N-(4-iodophenyl)phthalimide})ether, bis(4-{N-(3-iodophenyl)phthalimide})ether, 2,2-bis(4-{N-(3-iodophenyl)phthalimide})hexafluoropropane, 2,2-bis(3-{N-(3-iodophenyl)phthalimide})hexafluoropropane, bis(4-{N-(4-iodophenyl)phtholimide})ketone, bis(4-{N-(3-iodophenyl)phthalimide})ketone, bis(4-{N-(4-iodophenyl)phthalimide})sulfone, bis(4-{N-(3-iodophenyl)phthalimide})sulfone, bis(N-(4-iodophenyl))-pyromel-litimide, and bis(N-(3-iodophenyl))pyromellitimide.

7. The method of Claims 1, 2, 3, or 6 wherein said coreactant is selected from the group consisting of 1,4-diamino-benzene, 1,3-diaminobenzene, 4,4'-diaminodiphenylether, 3,4'-diaminodiphenylether, 4,4'-diaminodiphenylmethane, 4,4'-diaminobenzophenone, 4,4'-diaminodiphenylsulfone, 2,2-bis(4-(4-aminophenoxy)phenyl)propane, 5-amino-3-(4-aminophenyl)-1,1,3-trimethylindane, 1,4-bis(2-(4-aminophenyl)propyl)benzene, 4,4'-bis(3-aminophenoxy)diphenylsulfone, 1,6-diaminohexane, and bis(3-aminopropyl)tetramethyldisiloxane.

8. The method of Claims 1 or 2 wherein said imide reactant is selected from the group consisting of bis-(N-(4-aminophenyl))pyromellitimide, bis(N-(3-aminophenyl))pyromellitimide, bis(4-{N-(4-aminophenyl)-phthalimide})ketone, bis(4-{N-(3-aminophenyl)phthalimide})ketone, bis(4-{N-(4-aminophenyl)-phthalimide})ether, bis(4-{N-(3-aminophenyl)phthalimide})ether, bis(4-{N-(4-aminophenyl)phthalimide})-methane, bis(4-{N-(3-aminophenyl)phthalimide})methane, 2,2-bis(4-{N-(4-aminophenyl)phthalimide})-hexafluoropropane, 2,2-bis(4-{N-(3-aminophenyl)phthalimide})hexafluoropropane, bis(4-{N-(4-aminophenyl)phthalimide})sulfone, bis(4-{N-(3-aminophenyl)phthalimide})sulfone, bis(N-{4-(4-aminophenoxy)phenyl})pyromellitimide, and bis(N-{4-(3-aminophenoxy)phenyl})pyromellitimide.

9. The method of Claims 1, 2, or 8 wherein said coreactant is selected from the group consisting of 1,4-diodobenzene, 1,3-diodobenzene, 4,4'-diiododiphenyl ether, 4,4'-diiodobenzophenone, 2,6-diiodonaphthalene, 2,8-diiododibenzofuran, 4,4'diiododiphenylsulfone, 4,4'diiodobiphenyl, 1,4-dibromobenzene, 1,3-dibromobenzene, 4,4'dibromodiphenylmethane, 4,4'dibromobenzophenone, 2,6-dibromonaphthalene, 4,4'-dibromodiphenyl, 2,5-bis(4-bromophenyl)-3,4-diphenylthiophene, 2,5-diiodothiophene, and 2,6-diiodopyridine.

10. The method of Claims 1, 2, or 3 wherein said imide reactant is selected from the group consisting of N-(4-aminophenyl)-N-(4-iodophenyl)pyromellitimide, N-(3-aminophenyl)-N-(3-iodophenyl)pyromellitimide, 2-(4-{N-(4-aminophenyl)phthalimide})-2-(4-{N-(4-iodophenyl)phthalimide})hexafluoropropane, 2-(4-{N-(3-aminophenyl)phthalimide})-2-(4-{N-(3-iodophenyl)phthalimide})hexafluoropropane, 2-(4-{N-(4-aminophenyl)phthalimide})-2-(4-{N-(4-(4-iodophenoxy)phenyl)phthalimide})hexafluoropropane, and 2-(4-{N-(4-aminophenyl)phthalimide})-2-(4-{N-(4-(4-iodophenoxy)phenyl)phthalimide})hexafluoropropane.